# EUROPÄISCHE PATENTSCHRIFT

(11) **EP 0 731 543 B1**
(45) Veröffentlichungstag und Bekanntmachung des Hinweises auf die Patenterteilung: **21.11.2001**
(21) Anmeldenummer: 96103326.3
(22) Anmeldetag: 04.03.1996
(51) Int. Cl.: H02H 3/04

(54) **Kurzschlussanzeiger**
Short circuit indicator
Indicateur de court-circuit

(30) Priorität: 06.03.1995 DE 19507772
(43) Veröffentlichungstag der Anmeldung: 11.09.1996
(73) Patentinhaber: Dipl.-Ing. H. Horstmann GmbH, 42579 Heiligenhaus (DE)
(72) Erfinder: Huppertz, Werner, D-45257 Essen (DE)
(74) Vertreter: Patentanwälte Dr. Solf & Zapf

(56) Entgegenhaltungen:
- WO-A-91/02395
- US-A- 5 168 414
- US-A- 5 255 148

## Beschreibung

### Technisches Gebiet

Die Erfindung betrifft einen Kurzschlußanzeiger zur Erfassung eines Fehlers in einer Stromversorgungsanlage, der einen Stromsensor, eine Auswerteschaltung für die vom Strom abgeleiteten Meßwerte und eine vom Kurzschlußstrom ausgelöste Anzeigeeinheit aufweist.

### Stand der Technik

Ein derartiger Kurzschlußanzeiger ist aus dem US-Patent 5,168,414 bekannt geworden. Eingangsseitig ist ein Stromwandler vorgesehen, der auf den zu überwachenden Leiter, also eine Freileitung, ein Stromkabel oder eine Stromschiene aufgesetzt wird. Die Sekundärwicklung des Stromwandlers ist an einen Überstromdetektor angeschlossen. Dieser weist eine Gleichrichterschaltung auf, die eine dem Strom proportionale Gleichspannung liefert. Ein Spannungsteiler aus Widerstand und Potentiometer dient der Einstellung des Ansprechwertes.
Dem Spannungsteiler ist ein Operationsverstärker nachgeschaltet, der beim Überschreiten des eingestellten Überstromwertes leitend wird.
Der Ausgang des Überstromdetektors steuert einen Speicher-Flip-Flop an. Dessen Ausgangssignal läßt ein elektronisches Zählwerk anlaufen. Ein dem Zählwerk nachgeordnetes NAND-Gatter kann dem Speicher-Flip-Flop einen Rückstellimpuls erteilen, wenn ein bestimmter Zeitraum abgelaufen ist. Der Speicher-Flip-Flop kann zurückgestellt und neu gesetzt werden, wenn der hohe Stromwert noch ansteht. Auf diese Weise kann man dauerhafte Überströme trennen von Spitzenwerten, wie sie z.B. bei Blitzschlag auftreten können.
Der Q-Ausgang des Speicher-Flip-Flop steuert einen Verstärker für kleine Ströme. Normalerweise steht der Ausgang Q des Speicher-Flip-Flop auf Null, so daß der Verstärker ausgeschaltet ist. Der Ausgang des Verstärkers für kleine Ströme führt zum Eingang eines digitalen Pass-Band-Filters, das zwei monostabile Flops aufweist. Deren jeweilige Öffnungszeit wird durch vorgeschaltete RC-Kombinationen bestimmt. Der zweite Monoflop ist dem ersten nachgeschaltet. Sein Ausgang ist mit einem Integrator verbunden, der ein Rückstellsignal an das Speicher-Flip-Flop abgibt.
Der Verstärker für kleine Ströme dient dazu, die im Stromwandler gebildete Meßspannung zu verstärken und diesen Wert der Filtereinheit zuzuführen, die vorzugsweise Frequenzen durchläßt, die in der Nähe der Netzfrequenz, also 50 oder 60 Hz, liegen.
Die Anzeigeeinheit zeigt an, wenn ein echter Fehler geortet ist und die dem Netz zugeordnete Schutzeinrichtung angesprochen hat. Als Anzeigeelement wird eine Blink- oder Blitz-Diode eingesetzt.
Im Normalzustand des Leiters oder Netzes, also bei normalen Lastströmen, ist sowohl der Überstromdetektor als auch der Verstärker für kleine Ströme gesperrt. Alle weiteren Baueinheiten, also Speicher-Flip-Flop, Zählwerk, Schieberegister, Filter, Integrator und Anzeigeeinheit sind im Ruhezustand. Das Gerät benötigt dadurch lediglich einen sehr kleinen Ruhestrom. Als Versorgungseinheit wird vorzugsweise eine langlebige Lithiumbatterie benutzt.

Beim Auftreten eines Überstromes, der den mehrfachen Wert des normalen Laststromes hat, läuft die beschriebene Meßwertverarbeitungseinrichtung an. Das Gerät erfaßt den Überstrom während eines bestimmten Zeitraumes und speichert dieses Signal. Anschließend werden für den gleichen Zeitraum die Daten des Verstärkers für kleine Ströme ausgewertet. Wenn nach der Hochstromperiode eine Phase mit einem Strom kleiner als 3 A auftritt, gilt dies als Beweis dafür, daß ein echter Kurzschluß vorlag, daß also die Sicherung oder Netzschutzeinrichtung angesprochen hat. In diesem Fall wird die Anzeigeeinheit eingeschaltet. Sie blinkt dann über einen einstellbaren Zeitraum von mehreren Stunden, bis sie vom Zählwerk abgeschaltet wird. Eine Rückstellung durch die Wiederkehr des normalen Laststromes oder von Hand ist aber auch möglich.
Wenn dagegen nur ein durch Blitzschlag, Wanderwellen odgl. ausgelöster Stromstoß vorlag, der die Sicherungseinheit nicht zum Ansprechen brachte, wird auch die Anzeigeeinheit nicht eingeschaltet.

Der beschriebene Kurzschlußanzeiger kann für den Einsatz in der Praxis mit einer Klemmenleiste ausgestattet sein, so daß das Gerät am Einsatzort mit einer Drahtbrücke auf den gewünschten Nennwert einstellbar ist.
Üblich sind z.B. Geräte mit einem Nennwert von
1000 A, 800 A, 600 A, 400 A.

Es gibt aber eine ganze Reihe von Anwendungsfällen, wo noch größere oder kleinere Nennwerte benötigt werden. Auch kann es vorkommen, daß einem Leiter mit aufgesetztem Kurzschlußanzeiger durch Netzumstellung eine andere - größere oder kleinere - Nennlast zugeteilt wird. Dann muß man den Kurzschlußanzeiger demontieren und neu einstellen, was im ungünstigsten Fall sogar eine Abschaltung des Leiters oder Netzes erfordert.

Die WO91/02395A beschreibt einen stromgesteuerten Fehleranzeiger, der zur Fehlererfassung in einem elektrischen Versorgungsnetz bei unterschiedlichen Lastzuständen geeignet ist. Dabei sind Stromsensoren und damit verbundene Fehleranzeiger vorgesehen, wobei jeder Fehleranzeiger auf den zugehörigen Stromsensor anspricht und bei Feststellung eines bestimmten Minimalstromes zurückgesetzt wird. Eine Ansprecheinrichtung erzeugt eine Ansprechanzeige, wenn der Strom innerhalb einer bestimmten Zeit um einen vorbestimmten Betrag ansteigt, wobei dieser vorbestimmte Betrag des Stromanstieges einstellbar ist. Dabei ist ein spezieller Detektor zur Feststellung des Stromanstieges sowie auch zur Feststellung eines Nullstromes vorgesehen, der nach einem zunächst aufgetretenen Stromanstieg durch eine Leitungstrennung, z.B. durch eine Sicherung, bewirkt werden kann.

Einen ähnlichen Fehleranzeiger beschreibt auch die US 5 255 148 A. Dieser Fehleranzeiger umfaßt einen Stromdetektor und einen Reset-Schaltkreis zum Erzeugen einer Rücksetzanzeige als Reaktion auf einen bestimmten Minimalstrom. Eine Ansprechschaltung erzeugt in Abhängigkeit von einem einen bestimmten Ansprechwert übersteigenden Strom eine Ansprechanzeige. Die Ansprechschaltung weist einen Wählschalter auf, der den Mittelwert des Stromes überwacht und einen Ansprechwert als vorbestimmtes Vielfaches des Mittelwertes festlegt. Dazu weist der Wählschalter eine Mittelwertschaltung und einen Verstärkungsregler zum Ermitteln des bestimmten Vielfachen des Strommittelwertes auf.

### Darstellung der Erfindung

Der Erfindung liegt die Aufgabe zugrunde, einen Kurzschlußanzeiger zu schaffen, der sich selbsttätig auf einen Spitzenbelastungswert einstellt, wobei unter Verringerung der Lagerhaltung mit einem einzigen Gerät ein wesentlich breiterer Strombereich abgedeckt werden soll.

Die Erfindung löst diese Aufgabe dadurch, daß dem Stromsensor eine variable Bürde parallel geschaltet ist, die auch bei verschiedenen Stromniveaus die Ausgangsspannung auf einen konstanten Wert regelt und diesen Wert speichert, daß die Ausgangsspannung einem Zeit-Strom-Trigger zugeführt ist, der beim Überschreiten eines Grenzwertes ein Signal auf ein bistabiles Flip-Flop durchschaltet, daß das Flip-Flop ein Zählwerk anstößt und daß das Zählwerk eine Anzeigeeinrichtung startet.

### Beschreibung der Zeichnungen

Ein Ausführungsbeispiel wird anhand von Fig. 1-6 der Zeichnung dargestellt.
- Fig. 1: zeigt ein Blockschaltbild,
- Fig. 2: einen vereinfachten Stromlaufplan des neuartigen Kurzschlußanzeigers,
- Fig. 3: das Schaltbild einer digitalen variablen Bürde,
- Fig. 4: ein erweitertes Blockschaltbild,
- Fig. 5: einen Stromlaufplan,
- Fig. 6: ein Blockschaltbild.

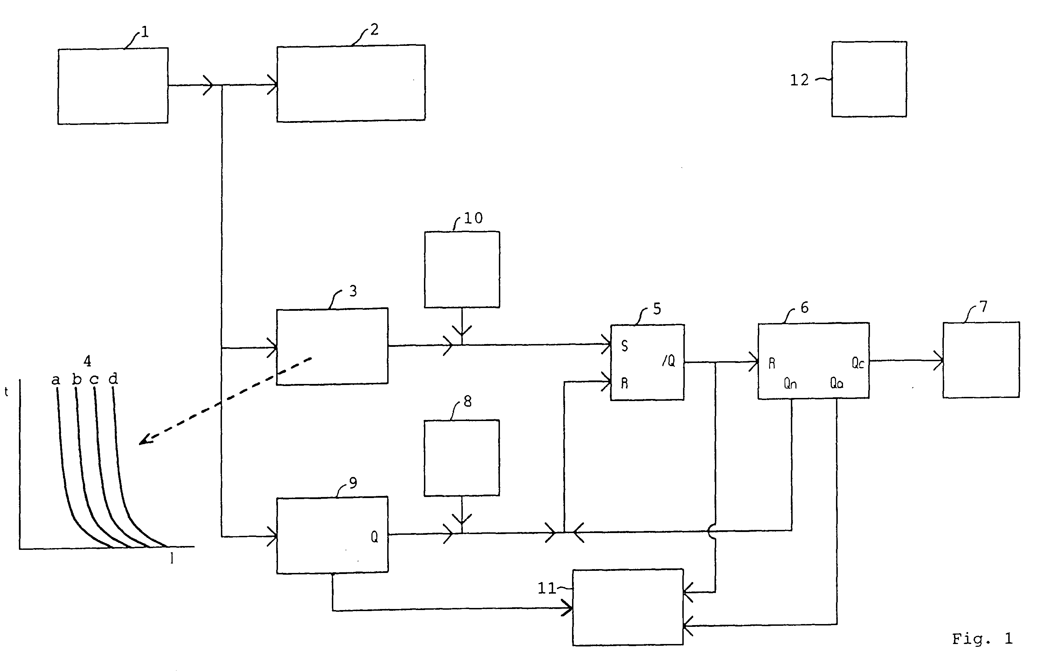

In Fig. 1 ist mit 1 ein Stromsensor bezeichnet, der magnetisch mit dem Stromleiter gekoppelt ist.
Der Stromsensor 1 speist eine variable Bürde 2, die ihren Widerstand zeitverzögert mit dem Strom ändert. Die normierte Meßspannung wird einem Strom-Zeit-Trigger 3 zugeführt, der bei einem starken, schnellen Anstieg der Meßspannung anspricht. Die Ansprechkurven des Triggers sind in dem Diagramm 4 dargestellt. Ohne die variable Bürde 2 würde nur die linke Kurve a gelten. Sie besagt, daß die Ansprechzeit umso kürzer ausfällt, je höher der Überstrom ist. Die Kurve a ist dem kleinsten Strombereich, z.B. 10 A, zugeordnet. Bei höherem Grundlaststrom wird die variable Bürde 2 so niederohmig, daß der Trigger erst bei einem Kurzschlußstrom anspricht, der der Kurve b entspricht. Bei noch höherer Grundlast gelten die Kurven c, d, etc.

Das Ausgangssignal des Triggers 3 wird dem Eingang S eines bistabilen Flip-Flop 5 zugeleitet. Dem Flip-Flop ist ein Zählwerk 6 nachgeschaltet, das unter anderem die Anzeigeeinheit 7 steuert. Ein Rücksetz-Kontakt 8 erlaubt es, von Hand einen Rücksetzimpuls auf den Rücksetzeingang R des bistabilen Flip-Flop 5 zu geben. Dadurch wird über den Zähler 6 die Anzeigeeinheit ausgeschaltet.

Mit 9 ist ein Rücksetz-Stromverstärker bezeichnet, dessen Eingang am Stromsensor 1 liegt. Dieser Verstärker stellt nach einem Ansprechen des Strom-Zeit-Triggers fest, ob der Strom in dem Leiter fast auf Null zurückgegangen ist. Ist dies nicht der Fall, hat also der Schutz nicht abgeschaltet, sendet der Rücksetz-Stromverstärker 9 ein Signal in ein Strom-Rücksetz-Fenster 11, dem weitere Signale vom bistabilen Flip-Flop 5 und vom Zähler 6 zugeleitet werden. Das Strom-Rücksetz-Fenster 11 wird vom Zähler 6 nur für wenige Sekunden aktiviert, um zu verhindern, daß das durch Kurzschluß ausgeschaltete Gerät durch erfolgreiche Wiedereinschaltung des Netzes oder durch störende Nachbarfelder unkontrolliert zurückgesetzt werden kann. Das Gerät wird durch eine Langzeitbatterie 12 - vorzugsweise eine Lithiumbatterie - versorgt.

Die übliche Rücksetzung des Gerätes erfolgt dadurch, daß der Zähler 6 nach Ablauf der eingestellten Zeit (von einigen Stunden) über seinen Ausgang Qn einen Rücksetzimpuls abgibt, der dem Rücksetz-Eingang R des bistabilen Flip-Flop 5 zugeleitet wird.
Das Gerät kann aber auch bei Rückkehr des Stromes über den Rücksetz-Strom-Verstärker 9 zurückgestellt werden.

Ein Testkontakt 10 erlaubt es, das Gerät von Hand anzuregen, so daß die üblichen Funktionsschritte ablaufen, bis die Rückstellung per Hand über den Kontakt 8, nach Zeitablauf oder durch Stromfluß erfolgt.

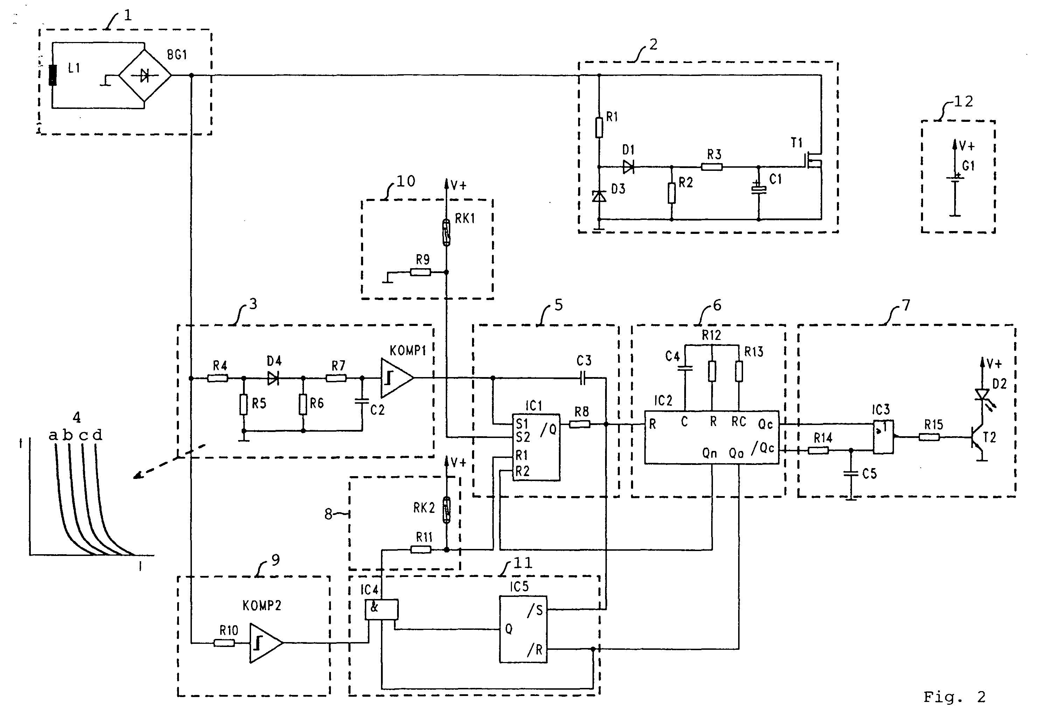

In dem Stromlaufplan nach Fig. 2 sind in den Bausteinen 1-12 die Bauelemente, Verstärker und andere integrierte Schaltkreise dargestellt. Hauptelement des Stromsensors 1 ist eine Spule L1, die mit dem zu überwachenden Stromleiter magnetisch gekoppelt ist. Die an der Spule L1 anfallende, dem Primärstrom proportionale Wechselspannung, deren Frequenz vorzugsweise 50 oder 60 Hz beträgt, wird dem Brücken-Gleichrichter BG1 zugeführt. Seine Ausgangsspannung wird als die Meßspannung U_{M} bezeichnet.

Wenn man davon ausgeht, daß in dem überwachten Leiter der niedrigste aller zu erwartenden Ströme, also im Mittel etwa 10 A fließen, und wenn man den Stromwandler so dimensioniert, daß dann eine Meßspannung U_{M} anliegt, die kleiner als der Ansprechwert der variablen Bürde 2 ist, arbeitet das Gerät auf der niedrigsten Ansprechkurve 4a. Es bleiben also die Bausteine 3,5,6 und 7 im Ruhezustand.
Wenn jetzt ein plötzlicher starker Stromanstieg, ein Kurzschluß, auftritt, geht die Meßspannung U_{M} steil nach oben. Diese Spannung fällt an dem Spannungsteiler R4, R5 des Strom-Zeit-Triggers 3 ab. Über die Diode 4 und den Widerstand R7 wird der Kondensator C2 aufgeladen.
Im Halbwellental der Meßspannung wird der Kondensator C2 über die Widerstände R6, R7 langsam entladen. Abhängig von der Stromamplitude und der Dauer des Stromimpulses wird die Schaltschwelle des Komparators KOMP1 überschritten.

Die Bauelemente sind so dimensioniert, daß das Auslöseverhalten der Strom-Zeit-Kurve 4a folgt, die der Sicherungskennlinie des Netzes weitgehend entspricht.
Die positive Flanke des nicht invertierenden Komparators KOMP1 aktiviert den positiv flankengesteuerten Setzeingang S1 des bistabilen Flip-Flop 5, so daß der inverse Ausgang des Flip-Flop logisch 0 wird und über den Widerstand R8 das Zählwerk 6 freigegeben wird. Der Freigabebefehl gelangt auf den hoch aktiven Rückstelleingang R des Zählwerkes 6. Der integrierte Schaltkreis IC2 des Zählwerkes 6 weist einen Oszillator mit einer Referenzfrequenz auf, von der alle zeitbestimmenden Abläufe des Gesamtgerätes gesteuert werden. Die Widerstände R12, R13 und der Kondensator C4 stellen die äußere Beschaltung des Schaltkreises IC2 dar. Die komplementären Ausgänge Qc und /Qc speisen die Anzeigeeinheit 7, die außer der Leuchtdiode D2 und dem Steuertransistor T2 eine Impulsformerstufe aufweist, die aus einem Vorwiderstand R14, einem Kondensator C5 und einem NOR-Gatter IC3 besteht. Die Impulsformerstufe erzeugt aus den symmetrischen Impulsen des Zählerausganges einen asymmetrischen Signalverlauf.
Wenn der Ausgang Qc hoch ist, fällt der komplementäre Ausgang /Qc auf niedrig. Der Ausgang des NOR-Gatters IC3 wird aufgrund des hohen Pegels des Ausganges Qc niedrig. Der zweite Eingang des NOR-Gatters IC3 erhält noch für die Dauer der vom RC-Glied gebildeten Zeitkonstante ein Hoch-Signal. Zum Taktwechsel der Ausgänge Qc und /Qc ist der Kondensator C5 bereits völlig entladen, so daß der Ausgang Qc niedrig und der Ausgang /Qc hoch ist. Ab jetzt bis zum Ablauf der Zeitkonstante sind beide Eingänge des NOR-Gatters IC3 niedrig und der Ausgang ist hoch. Überschreitet die Spannung am Kondensator C5 den Schwellenwert des Einganges des NOR-Gatters, kippt dessen Ausgang wieder auf niedrig.

Während der Hoch-Phase des Ausgangs des Gatters erhält der Transistor T2 über den Basiswiderstand R15 einen begrenzten Basisstrom, so daß auch der Kollektorstrom durch die Leuchtdiode D2 einen Maximalwert nicht überschreitet. In der Niedrig-Phase des NOR-Ausganges ist der Transistor T2 gesperrt.

Beim Anlaufen des Zählwerkes 6 ist das bistabile Flip-Flop IC5 des Rücksetz-Fensters 11 durch die fallende Flanke des Zählersignals gesetzt worden und der Ausgang Q des Flip-Flop IC5 wurde hoch.

Durch das Fortschalten des Zählwerkes 6 wird nach einer längeren, eingestellten Zeit der Ausgang Qa auf hoch geschaltet, so daß dann ein zweiter Eingang des Und-Gatters IC4 hoch wird. Überschreitet nun die Meßspannung U_{M}, die einem definierten, geringen Strom entspricht, den definierten Schwellenwert des nicht invertierenden Komparators KOMP2, so wird der dritte Eingang des Und-Gatters IC4 im Takt der Halbwellen des Meßsignales hoch und niedrig. Wenn der Ausgang des Gatters IC4 hoch ist, wird das bistabile Flip-Flop 5 über seinen Rücksetz-Eingang R1 in die Ruhelage geschaltet, das Zählwerk 6 wird gestoppt und die Anzeigeeinheit 7 abgeschaltet. Das Gesamtgerät ist damit erneut im Überwachungszustand.

Ist dagegen die Meßspannung UM kleiner als der Triggerpegel des Komparators KOMP2, so wird durch das Weiterzählen des Zählwerkes 6 der Ausgang Qa nach einigen Sekunden niedrig, ebenso der zweite Eingang des Und-Gatters IC4. Mit der negativen Flanke des Ausgangs Qa wird das bistabile Flip-Flop 5 zurückgesetzt. Der Ausgang Q des Flip-Flop IC4 wird nach einer Aktivierung nur einmal für wenige Sekunden hoch. Diese Zeit bezeichnet man als das Rückstell-Fenster. Während dieser Zeit kann das Gerät über die vom Betriebsstrom abgeleitete Meßspannung UM zurückgesetzt werden.
Die Kurzschlußanzeige soll also nicht bestehen bleiben, wenn der Überstrom nicht zum Ansprechen der Sicherung oder des Netzschutzes geführt hat.

Wenn das Gerät durch einen Überstrom angeregt und nicht durch einen weiterfließenden Betriebsstrom zurückgesetzt wurde, läuft das Zählwerk 6 solange weiter hoch, bis die eingestellte Zeit - in der Regel einige Stunden - erreicht ist. Dann wird der Ausgang Qn hoch und das bistabile Flip-Flop 5 wird über seinen Rückstelleingang R2 gekippt.

Während der aktiven Zeit kann das Gerät durch einen erneut auftretenden Überstrom retriggert werden. Wenn die Meßspannung UM den Schwellenwert des Komparators KOMP1 überschreitet, wird dessen Ausgang von niedrig auf hoch geschaltet. Währenddessen liegt der bereits aktive Ausgang /Q des Flip-Flop 5 auf niedrig und damit über den Widerstand R8 auch der Kondensator C3. Die positive Flanke des Komparators KOMP1 gibt über den als Differenzierglied geschalteten Kondensator C3 einen kurzen positiven Spannungsimpuls auf den hoch-aktiven Rücksetzeingang des Zählwerkes 6. Dadurch wird der Zählerstand gelöscht und alle seine Ausgänge gehen auf niedrig.

Sollte zu dieser Zeit das bistabile Flip-Flop IC5 noch aktiv gewesen sein, wird es durch die negative Flanke des Ausgangs Qa des Zählwerkes 6 über den Rückstelleingang /R zurückgesetzt. Nach Ablauf der durch das RC-Glied R8, C3 gebildeten kurzen Zeitkonstante wird der Rückstelleingang R des Zählwerkes 6 wieder niedrig und das Zählwerk wird erneut gestartet. Mit der negativen Flanke des Differenziergliedes R8, C3 wird der niedrigaktive Setzeingang des Flip-Flop IC5 getriggert, wodurch der Ausgang Q dieser Stufe hoch wird.

Bei der bisherigen Funktionsbeschreibung wurde die variable Bürde noch nicht einbezogen, weil der niedrigste interessierende Betriebsstrom vorausgesetzt wurde. Wenn das Netz dauerhaft einen höheren Betriebsstrom führt, so paßt sich das Gerät mit Hilfe der variablen Bürde 2 dieser Last selbsttätig an.

Wird das Gerät an einen Leiter angeschlossen, dessen mittlerer Betriebsstrom z.B. 150 A beträgt, entsteht eine höhere Meßspannung U_{M}. Diese pulsierende Gleichspannung lädt über den Widerstand R1, der mit einer spannungsbegrenzenden Zenerdiode D3 in Reihe liegt, einen Kondensator C1 langsam auf. Der Ladestrom wird durch den Widerstand R3 begrenzt. Damit der Kondensator C1 während der Wellentäler nicht über den Widerstand R1 entladen werden kann, ist eine Diode D1 vorgesehen. Ein wesentlich größerer Widerstand R2 ist an die Verbindung der Diode D1 und des Widerstandes R3 angeschlossen, so daß die gewollte Entladung des Kondensators C1 über die Widerstände R3 und R2 gering bleibt. Die Ladespannung am Kondensator C1 liegt am Gate eines Feldeffekttransistors T1, dessen Bahnwiderstand zwischen Source und Drain von der am Gate anliegenden Spannung abhängt. Der Transistor T1 wirkt mit seiner Beschaltung als variable Bürde zu der durch die Spule L1 und den Gleichrichter BG1 gebildeten Stromquelle. Der Transistor T1 leitet unter Reduzierung der Meßspannung U_{M}gerade so viel Strom ab, daß der Ladestrom über den Widerstand R3 in den Kondensator C1 im Gleichgewicht ist mit der Entladung über die Widerstände R3 und R2.
Die variable Bürde 2 ist im Prinzip ein Parallelregler mit sehr träger Regelcharakteristik. Die variable Bürde paßt sich ständig - wenn auch sehr langsam - dem Betriebsstrom an.
Ein hoher, dem Betriebsstromniveau überlagerter Überstrom oder Kurzschlußstrom läßt die Meßspannung U_{M} so in die Höhe schnellen, daß der Strom-Zeit-Trigger anspricht. Durch Dimensionierung der variablen Bürde 2 wird erreicht, daß zwischen dem Betriebsstrom und dem nach der Strom-Zeit-Kennlinie definierten Anregestrom ein festes Verhältnis besteht. Der Ansprechwert ist also der n-fache Betriebsstrom. Dabei wird dann statt der Strom-Zeit-Kennlinie 4a irgend eine andere verschobene Kennlinie 4b, 4c, etc. benutzt. Man paßt dabei durch Dimensionierung der Bauteile die Kennlinie in etwa der Sicherungskennlinie bzw. der Charakteristik des Netzschutzes an. Das Ansprechverhalten der variablen Bürde ist so ausgewählt, daß die als Dauerwert nach oben begrenzte Meßspannung UM den Strom-Zeit-Trigger nicht auslöst.

Durch die stetige Anpassung des Bürdenwiderstandes an den mittleren Betriebsstrom wird das Kernmaterial des Stromwandlers wegen der ständigen Strombelastung erst bei extrem hohen Strömen in die Sättigung gelangen.

Die große Zeitkonstante der variablen Bürde hat zusätzlich den Vorteil, daß bei Netzabschaltzeiten bis zu 24 Stunden der Betriebsstromwert gespeichert bleibt und folglich beim Wiedereinschalten keine Anregung erfolgt.

Zu Testzwecken kann das Gerät magnetisch per Hand über einen Reed-Kontakt RK1 angeregt werden. Dieser KOntakt verbindet die Batterie 12 mit einem Widerstand R9, so daß ein Spannungsimpuls am Setzeingang S2 des bistabilen Flip-Flop IC1 anliegt. Mit der Aktivierung laufen alle Zeitfunktionen ab.
Ein zweiter Reed-Kontakt RK2 erlaubt es, in Verbindung mit einem Widerstand R11, über den Rücksetzeingang R1 das Flip-Flop 5 zurückzustellen und damit das Gerät in den Überwachungszustand zu bringen.

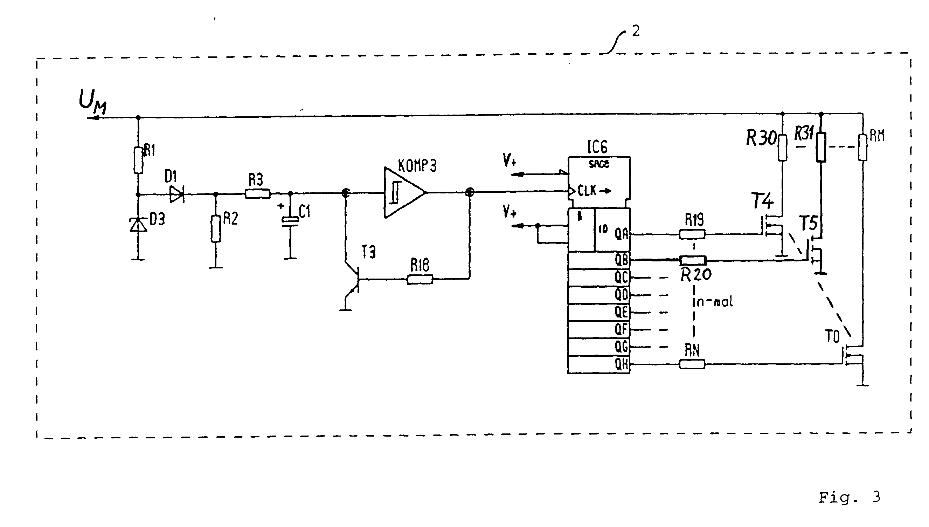

In Fig. 3 ist eine andere Ausgestaltung der variablen Bürde 2 verwirklicht.
Die Eingangsschaltung mit den Widerständen R1, R2, R3, den Dioden D1, D3 und dem Kondensator C1 ist die gleiche wie in Fig. 2. An den Kondensator ist ein Komparator KOMP3 und ein Transistor T3 angeschlossen. Dessen Basis liegt über einen Widerstand R18 am Komparatorausgang. Überschreitet die Ladespannung am Kondensator C1 die Schaltschwelle des Komparators, so kippt dessen Ausgang von niedrigem auf hohes Potential. Dadurch fließt über den Widerstand R18 ein Basisstrom über den Transistor T3. Dieser schaltet durch und entlädt den Kondensator C1 bis unter die Hysteresespannung.

Am Ausgang des Komparators liegt ein digitaler Speicher IC6, dessen Ausgänge QA, QB usw. bis QH mit Widerständen R19, R20 usw. bis RN verbunden sind. Diese Widerstände liegen jeweils an der Basis eines von mehreren Feldeffekttransistoren T4, T5 usw. bis TO, denen Lastwiderstände R30, R31 usw. bis RM zugeordnet sind.
Die Feldeffekttransistoren arbeiten anders als der Transistor T1 in Fig. 2 als reine Schalter.

Bei einem neuen Kurzschlußanzeiger ist der digitale Speicher werksseitig zurückgesetzt. Alle Ausgänge befinden sich auf niedrigem Potential und die angeschlossenen Feldeffekttransistoren sind gesperrt. Wird dieses Gerät auf eine Stromschiene oder ein Kabel gesetzt, dessen Strombelastung so gering ist, daß der Kondensator C1 die Schwellenspannung des Komparators KOMP3 nicht erreicht, bleibt der digitale Speicher zurückgesetzt.
Steigt der Strom dauerhaft über den ersten Grenzwert an, dann kippt der Komparator KOMP3. Er leitet einen Fortschaltimpuls in den digitalen Speicher. Dessen Logik-Pegel steigt an seinem Ausgang QA von niedrig auf hoch. Über den Widerstand R19 wird der Transistor T4 dauerhaft leitend geschaltet, wodurch der Widerstand R30 eine Dauerlast für den Meßwertgeber bildet.
Mit anderen Worten wird die Meßspannung U_{M} durch die Zuschaltung der Bürde R30 dauerhaft gesenkt. Der Überstromanzeiger hat sich also auf die erste digitale Stufe eingepegelt. Die Bürdeneinstellung bleibt als Spitzenwert dauerhaft gespeichert, bis die Last einen neuen, höheren Grenzwert dauerhaft überschreitet. Ein erneuter Triggerimpuls des Komparators wird dann einen zweiten Ausgang QB des Speichers aktivieren, so daß über R20 der Transistor T5 geschaltet wird und der Bürdenwiderstand R31 als zusätzliche Dauerlast auftritt.

Nach jedem Triggerimpuls wiederholt sich dieses Spiel auf einer höheren Stufe, wobei jeweils der Kondensator so weit entladen wird, bis der Komparator KOMP3 und damit der Transistor T3 erneut sperrt.

Der Lade- und Laständerungszyklus wird so lange fortgesetzt, bis ein zum Betriebsstrom passender Bürdenwiderstand aktiviert wurde. Das Gerät arbeitet dann auf dem maximalen Strom, der langfristig in dem überwachten Netz vorkommt. Es ist also optimal der Netzleistung angepaßt.

Kurzzeitige Überströme oder Kurzschlußströme verändern die Bürdeneinstellung nicht, sondern sie gehen voll in die Strom-Zeit-Kennlinie des Gerätes ein und können so zur Kurzschlußanzeige führen.

Bezüglich des Betriebsverhaltens gilt zusammenfassund folgendes:
1. Alle denkbaren Betriebsstrombereiche lassen sich mit einem einzigen Gerät nach Fig. 2 oder 3 ohne Anpassungsmaßnahmen oder Umklemmarbeiten abdecken.
2. Kurzschlüsse werden sicher erfaßt und dauerhaft angezeigt.
3. Vorübergehende Überströme, z.B. Wanderwellen oder Einschaltstromstöße führen normalerweise nicht zur Anregung, weil die nahe bei der Sicherungskennlinie liegende Kennlinie dies abdeckt.
   Sollte es trotzdem zur Anregung kommen, erfolgt nach einigen Sekunden eine Rückstellung, wenn die Sicherung nicht angesprochen hat und der normale Betriebsstrom weiter fließt. Das gilt auch dann, wenn ein Netz zum ersten Mal auf eine große Last geschaltet wird und das Anregeniveau des auf niedrigstem Wert befindlichen Gerätes überschritten wird. Innerhalb des Rückstellfensters schaltet das Gerät zurück. In dieser Zeit hat dann auch die Bürdenanpassung stattgefunden.
   Die Stromrückstellung wird nur deshalb für wenige Sekunden aktiviert, um zu verhindern, daß das durch Kurzschluß angeregte Gerät durch erfolgreiche Wiedereinschaltung des Netzes oder durch Nachbarfelder unkontrolliert zurückgesetzt wird.
4. Falls die kurzzeitige Überstromanzeige als störend empfunden wird, kann man mit Hilfe des Zählwerkes die Einschaltung der Anzeigeeinheit so lange unterdrücken oder zurückhalten, bis das Fenster der Stromrücksetzung geschlossen ist. Es wird also nur das endgültige Ergebnis der Messung angezeigt.
5. Die Rücksetzung des Gerätes erfolgt nach Ablauf der Anzeigezeit. Bei einem erneuten Überstrom in dieser Zeit wird der Zähler zurückgestellt und die Ablaufzeit startet erneut.
6. Abweichend von dem beschriebenen Beispiel kann das Strom-Rücksetz-Fenster 11 so geändert werden, daß grundsätzlich beim erneuten Eintreten eines Stromes oder bei weiterhin anstehendem Strom das Gerät zurückgesetzt wird. Die Rücksetzung ist dann nicht auf die Zeit des Fensters beschränkt. Sie erfolgt einige Sekunden nach der Triggerung,um das Anregeereignis abklingen zu lassen.
7. Ein weiteres Indiz für die Rückstellung kann sein, ob das die Netzspannung begleitende elektrische Feld bestehen bleibt oder zusammenbricht. Die Abfrage des Feldes kann in einem Fenster oder dauerhaft während der aktivierten Zeit erfolgen.

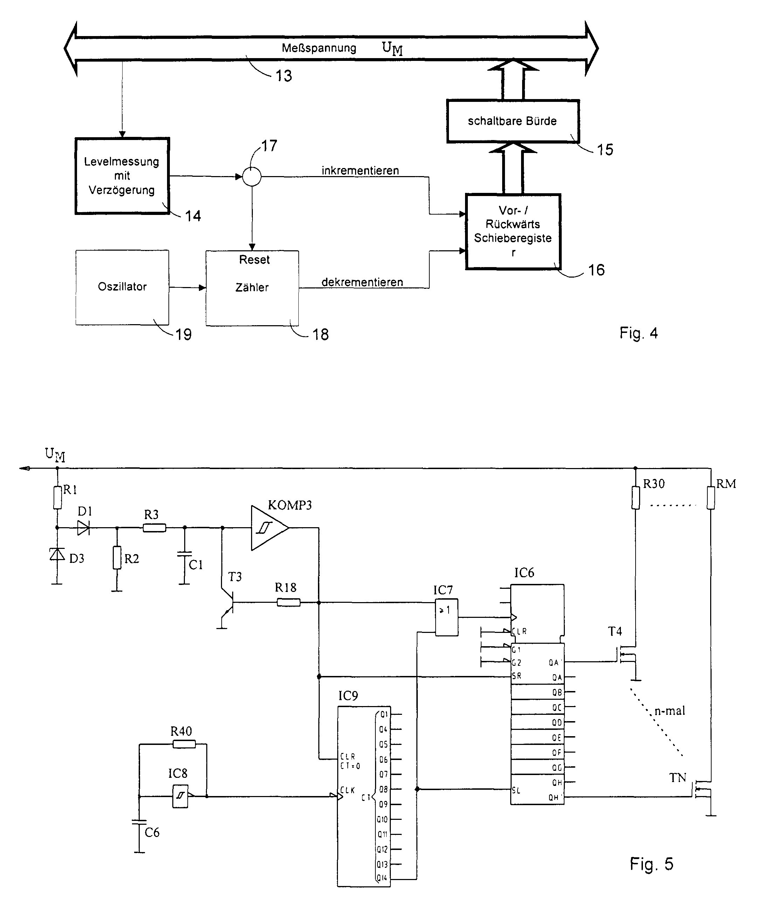

In Fig. 4 ist ein erweitertes Blockschaltbild dargestellt. Es zeigt eine Schiene 13, die die Meßspannung U_{M} führt. An diese Schiene ist eine Schaltungsanordnung 14 zur Levelmessung mit Verzögerung angeschlossen. Auf die Schiene 13 wirkt eine schaltbare Bürde 15 ein, die von einem Vorwärts-Rückwärts-Schieberegister 16 ausgesteuert wird.

Das Ausgangssignal der Schaltungsanordnung 14 wird über eine Weiche 17 dem Schieberegister 16 und einem Zähler 18 zugeführt. Der Zähler 18 wird von einem ständig laufenden Oszillator 19 derart gespeist, daß er in längeren Zeitabständen, z.B. einmal pro Tag, einen Rückstellimpuls an das Schieberegister 16 abgibt.

Im Rahmen der Fig. 3 wurde beschrieben, daß die Lastwiderstände dauerhaft auf die Meßschiene aufgeschaltet werden.
Der Fig. 4 liegt die Aufgabe zugrunde, die Bürde langfristig zu reduzieren, damit sich die Meßanordnung neuen, niedrigeren Lasten anpassen kann.

Wenn also innerhalb von 24 Stunden kein Impuls angefallen ist, der das Schieberegister 16 vorwärts schaltet, wird dieses Register über den Zähler 18 um eine Einheit zurückgestellt.
Wenn aber ein Vorwärtsimpuls anfällt, wird zugleich der Zähler 18 über den Reset-Eingang zurückgesetzt, so daß seine Zählung wieder bei Null beginnt.

In Fig. 5 ist schaltungstechnisch umgesetzt, was in dem Blockschaltbild nach Fig. 4 offenbart wird. Zugleich baut Fig. 5 auf Fig. 3 auf, so daß nur die neuen Elemente aufzuzählen sind:
Vor dem digitalen Speicher IC6 liegt ein Oder-Gatter IC7 und ein Zähler IC9. Dem Zähler ist ein Oszillator vorgeschaltet, der aus dem Verstärker IC8, dem Widerstand R40 und dem Kondensator C6 besteht. Der Ausgang des Oszillators liegt an dem Clock-Eingang des Zählers IC9.

Die beschriebene Schaltung arbeitet bei steigendem Strom wie folgt:
Ein Ansteigen der Meßspannung U_{M} infolge eines Betriebsstromes in dem überwachten Leiter führt zur Aufladung des Kondensators C1 über den Widerstand R1, die Diode D1 und den Widerstand R3. Die Zenerdiode D3 begrenzt diese Aufladung. Wenn jetzt die Schwellspannung des Spannungskomparators KOMP3 überschritten wird, gelangt ein Spannungsimpuls vom Ausgang des Komparators an den Inkrementeingang des digitalen Speichers oder Schieberegisters IC6, den Rücksetzeingang des Zählers IC9 und an das Oder-Gatter IC7. Dessen Ausgang gibt das Clocksignal an das Schieberegister IC6 weiter. Dadurch wird ein weiterer Ausgang dieses Schieberegisters aktiv und legt über einen der Transistoren T4 - TN einen weiteren Bürdenwiderstand R30 - RM an die Meßspannungsquelle U_{M}. Da diese Quelle nun durch die zugeschaltete Bürde höher belastet wird, geht der Spannungswert um einen definierten Anteil zurück. Zugleich wird im Eingangsbereich der Schaltung der Transistor T3 durch den Komparator KOMP3 über den Widerstand R18 leitend gesteuert, so daß er den Kondensator C1 entlädt. Der Komparator kippt in seine Ruhelage zurück.
Ist der Betriebsstrom im überwachten Leiter weiterhin ausreichend hoch, um die Meßspannung U_{M} über die Triggerschwelle des Komparators KOMP3 steigen zu lassen, wiederholt sich der obige Funktionsablauf. Ist die Regelung jedoch so weit angepaßt, daß die Meßspannung U_{M} nicht mehr zur Auslösung des Komparators führt, bleibt der Bürdenwert gespeichert.

Wenn über längere Zeiträume (Stunden, Tage) keine höheren Ströme mehr auftreten, sollen die Bürdenwerte ganz gezielt zurückgenommen werden, um damit die Ansprechempfindlichkeit der Schaltung zu erhöhen. Die Rückführung des Bürdenwertes erfolgt mittels des Oszillators IC8, R40, C6, des Zählers IC9 und des Oder-Gatters IC7. Die Frequenz des freilaufenden Oszillators wird über den Zähler IC9 so weit heruntergeteilt, daß er beispielsweise alle 24 Stunden einen Impuls abgibt, der auf den Dekrementeingang des Schieberegisters IC6 und auf einen Eingang des Oder-Gatters IC7 gelangt. Dadurch wird das höchstwertige Bit des Schieberegisters gelöscht und der zugeordnete Transistor gesperrt. Dies hat zur Folge, daß der zugeordnete Bürdenwiderstand stromlos und die Belastung der Meßspannungsquelle verringert wird. Die Meßspannung UM steigt somit ohne Änderung des überwachten Stromes um einen bestimmten Wert an.
Nach weiteren 24 Stunden wird erneut ein Bürdenwiderstand gesperrt, sofern nicht in der Zwischenzeit ein höherer Strom den Komparator KOMP3 erneut aktiviert.

Bei den bislang zugrunde gelegten Rückstellzeiten von mehreren Stunden bis zu etwa einem Tag paßt sich der Kurzschlußanzeiger völlig selbsttätig dem Langzeitverhalten des überwachten Netzes an. Er reagiert somit auf Veränderungen, wie sie durch Feiertage, Wetterwechsel odgl. ausgelöst werden.

Die Schaltung nach Fig. 5 kann aber auch als
Analog-Digital-Wandler
eingesetzt werden, wenn man die aus den Widerständen R1, R3 und dem Kondensator C1 gebildete Verzögerungszeit stark reduziert, den Oszillator beschleunigt und den Zähler IC9 auf einen viel kleineren Zählwert einstellt. Man erreicht damit ein schnelles, stromabhängiges Leveling. Der die Meßspannung liefernde Stromwandler arbeitet dabei in einem weiten Bereich linear. An den digitalen Ausgängen der Schaltung kann der Levelwert und damit der überwachte Strom direkt ausgelesen werden.

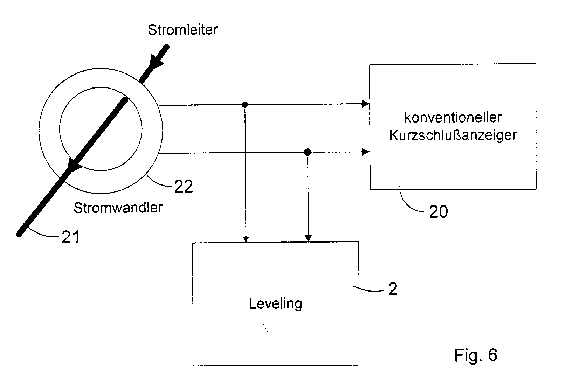

In Fig. 6 ist ein Blockschaltbild dargestellt, das die in Fig. 2 beschriebene analog arbeitende variable Bürde 2 mit einem konventionellen Kurzschlußanzeiger 20 in Verbindung bringt. Der überwachte Stromleiter ist mit 21 bezeichnet. Ein Stromwandler 22 speist sowohl die variable Bürde 2 als auch den Kurzschlußanzeiger 20.
Die variable Bürde 2, die man auch als analoge Levelschaltung bezeichnen könnte, besteht lediglich aus den Widerständen R1, R2, R3, den Dioden D1, D3, dem Kondensator C1 und dem Feldeffekttransistor T1. Diese Elemente werden direkt aus der Meßspannung gespeist, benötigen also keine Batterieversorgung. Dies macht sie hervorragend geeignet, an beliebige Überstrom- oder Kurzschlußanzeiger angeschlossen zu werden, sofern diese einen Trigger oder Komparator mit fester Schwelle aufweisen. Das durch die variable Bürde erweiterte Grundgerät arbeitet somit stromlevelorientiert. Mit anderen Worten heißt dies, daß sich der Ansprechwert automatisch dem aktuellen Leiterstrom anpaßt. Zwischen dem jeweiligen Leiterstrom und dem Anregestrom besteht wieder ein festes Verhältnis, nämlich der Anregefaktor.

Alle hier beschriebenen, sehr unterschiedlichen Schaltungen folgen der Grundidee der Erfindung, daß langsame Änderungen im Netz zur Anpassung des Meßgerätes, schnelle Stromanstiege (Kurzschlüsse) aber zum Ansprechen des Gerätes führen sollen.

### Gewerbliche Verwertbarkeit

Der beschriebene neuartige Kurzschlußanzeiger wurde entwickelt, um bei geringster Lagerhaltung in ganz unterschiedlichen Netzen unzulässige Überströme anzeigen zu können.

### Bezugszeichenliste

- 1: Stromsensor
- 2: variable Bürde
- 3: Strom-Zeit-Trigger
- 4: Diagramm
- 5: bistabiles Flip-Flop
- 6: Zählwerk
- 7: Anzeigeeinheit
- 8: Rücksetzkontakt
- 9: Rücksetz-Stromverstärker
- 10: Prüfkontakt
- 11: Strom-Rücksetz-Fenster
- 12: Versorgungsbatterie
- 13: Schiene
- 14: Schaltungsanordnung zur Levelmessung
- 15: schaltbare Bürde
- 16: Vorwärts-Rückwärts-Schieberegister
- 17: Weiche
- 18: Zähler
- 19: Oszillator
- 20: Kurzschlußanzeiger
- 21: Stromleiter
- 22: Stromwandler

- BG1: Brückengleichrichter
- C1 - C5: Kondensatoren
- D1 - D4: Dioden
- G1: Batterie
- IC1: bistabiles Flip-Flop
- IC2: Zählwerk
- IC3: Impulsformerstufe
- IC4: Und-Gatter
- IC5: bistabiles Flip-Flop
- IC6: digitaler Speicher
- IC7: Oder-Gatter
- IC8: Verstärker
- IC9: Zähler
- KOMP1, KOMP2, KOMP3: Komparatoren
- L1: Spule
- R1 - R18: Widerstände
- R19 - RN: Widerstände
- R30 - RM: Widerstände
- RK1, RK2: Kontakte
- T1: Feldeffekttransistor
- T2, T3: Schalttransistoren
- T4 - TO: Feldeffekttransistoren

## Patentansprüche

1. Kurzschlußanzeiger zur Erfassung eines Fehlers in einer Stromversorgungsanlage, der einen Stromsensor, eine Auswerteschaltung für die von dem Strom abgeleiteten Meßwerte und eine Anzeigeeinheit aufweist,
**dadurch gekennzeichnet,**
**daß** dem Stromsensor (1) eine variable Bürde (2) parallel geschaltet ist, die auch bei verschiedenen Stromniveaus
die Ausgangsspannung auf einen konstanten Meßwert (U_{M}) regelt und diesen Wert speichert,
**daß** diese Meßspannung (U_{M}) einem Zeit-Strom-Trigger (3) zugeführt ist, der beim Überschreiten eines Grenzwertes ein Signal auf ein bistabiles Flip-Flop (5) durchschaltet, daß das Flip-Flop (5) ein Zählwerk (6) anstößt und
**daß** das Zählwerk (6) eine Anzeigeeinrichtung (7) startet.

2. Kurzschlußanzeiger nach Anspruch 1, **dadurch gekennzeichnet, daß** ein vom Zählwerk (6) und der Meßspannung (U_{M}) gesteuertes Strom-Rückstell-Fenster (11) vorgesehen ist, das den Kurzschlußanzeiger in die Bereitschaft zurückschaltet, wenn der Überstrom lediglich ein vorübergehendes Ereignis ohne Folgen war.

3. Kurzschlußanzeiger nach Anspruch 2, **dadurch gekennzeichnet, daß** die Anzeigeeinheit (7) erst nach Ablauf des Strom-Rückstell-Fensters (11) aktiviert wird.

4. Kurzschlußanzeiger nach Anspruch 1, **dadurch gekennzeichnet, daß** die variable Bürde (2) einen Feldeffekttransistor (T1), eine spannungsbegrenzende Zenerdiode (D3) und ein das Zeitverhalten bestimmendes RC-Netzwerk (R1, R2, R3, C1) aufweist.

5. Kurzschlußanzeiger nach Anspruch 1, **dadurch gekennzeichnet, daß** die variable Bürde (2) eine spannungsbegrenzende Zenerdiode (D3), ein das Zeitverhalten bestimmendes RC-Netzwerk (R1, R2, R3, C1), einen Komparator (KOMP3), einen Entladetransistor (T3), einen digitalen Speicher (IC6), eine Gruppe von Schalttransistoren (T4 - TO) und eine Reihe von Bürdenwiderständen (R30 - RM) derart aufweist, daß die erreichte Laststufe dauerhaft gespeichert ist.

6. Kurzschlußanzeiger nach Anspruch 5, **dadurch gekennzeichnet, daß** jeder Ausgang (QA, QB bis QH) des digitalen Speichers (IC6) über einen Vorwiderstand (R19, R20 bis RN) einen Transistor oder Thyristor (T4,T5 bis TO) steuert, der einen Bürdenwiderstand (R30, R31 bis RM) dauerhaft zuschaltet.

7. Kurzschlußanzeiger nach Anspruch 6, **dadurch gekennzeichnet, daß** dem digitalen Speicher (IC6) ein Zähler (IC9) vorgeschaltet ist, der von einem Oszillator (IC8, R40, C6) gespeist wird und der periodisch einen Rückstellimpuls auf den digitalen Speicher (IC6) abgibt, wobei dieser Rückstellimpuls die variable Bürde verkleinert.

8. Kurzschlußanzeiger nach Anspruch 7, **dadurch gekennzeichnet, daß** der Ausgang des Komparators (KOMP3) mit einem Rückstelleingang des Zählers (IC9) verbunden ist.

9. Kurzschlußanzeiger nach Anspruch 7, **dadurch gekennzeichnet, daß** die Schaltung als Analog-Digital-Wandler zur stetigen Anzeige des aktuellen Stromes dient.

## Claims

1. Short-circuit indicator for detecting a fault in a power supply system, which has a current sensor, an evaluation circuit for the measured values derived from the current, and a display unit,
**characterized**
**in that** the current sensor (1) is connected in parallel with a variable burden (2) which, even for different current levels, regulates the output voltage at a constant measured value (U_{M}) and stores this value,
**in that** this measured voltage (U_{M}) is supplied to a time/current trigger (3) which passes a signal to a bistable flipflop (5) when a limit value is exceeded,
**in that** the flipflop (5) triggers a counter (6), and
**in that** the counter (6) starts a display device (7).

2. Short-circuit indicator according to Claim 1, **characterized in that** a current resetting window (11) is provided, which is controlled by the counter (6) and the measured voltage (U_{M}) and switches the short-circuit indicator back to readiness if the overcurrent was only a temporary event, without any consequences.

3. Short-circuit indicator according to Claim 2, **characterized in that** the display unit (7) is not activated until the current resetting window (11) has passed.

4. , Short-circuit indicator according to Claim 1, **characterized in that** the variable burden (2) has a field-effect transistor (T1), a voltage-limiting zoner diode (D3), and an RC network (R1, R2, R3, C1) which determines the time response.

5. Short-circuit indicator according to Claim 1, **characterized in that** the variable burden (2) has a voltage-limiting zoner diode (D3), an RC network (R1, R2, R3, C1) which determines the time response, a comparator (KOMP3), a discharge transistor (T3), a digital memory (IC6), a group of switching transistors (T4 - TO) and a range of burden resistors (R30 - RM), in such a manner that the load level which is reached is stored permanently.

6. Short-circuit indicator according to Claim 5, **characterized in that** each output (QA, QB to QH) of the digital memory (IC6) controls a transistor or thyristor (T4, T5 to T0), which connects a burden resistor (R30, R31 to RM) permanently, via a series resistor (R19, R20 to RN).

7. Short-circuit indicator according to Claim 6, **characterized in that** a counter (IC9) is connected upstream of the digital memory (IC6), is supplied from an oscillator (IC8, R40, C6), and periodically emits a resetting pulse to the digital memory (IC6), with this resetting pulse reducing the variable burden.

8. Short-circuit indicator according to Claim 7, **characterized in that** the output of the comparator (KOMP3) is connected to a resetting input of the counter (IC9)

9. , Short-circuit indicator according to Claim 7, **characterized in that** the circuit is used as an analogue/digital converter in order to indicate the actual current continuously.

## Revendications

1. Indicateur de court-circuit permettant de détecter un défaut dans une installation d'alimentation électrique, comprenant un détecteur de courant, un montage d'évaluation des valeurs de mesure dérivées par le courant et un voyant, **caractérisé en ce qu'**une charge variable (2) montée en parallèle avec le détecteur de courant (1) règle la tension de sortie à une valeur de mesure constante (U_{M}), même à des niveaux de courant différents, et met en mémoire cette valeur, **en ce que** cette tension de mesure (U_{M}) est amenée à un déclencheur temps-courant (3), qui commute un signal sur un flip-flop bistable (5) en cas de dépassement d'une valeur limite, **en ce que** ledit flip-flop (5) déclenche un compteur (6) et **en ce que** le compteur (6) active un voyant (7).

2. Indicateur de court-circuit suivant la revendication 1,
**caractérisé en ce qu'**il est prévu une fenêtre de réarmement de courant (11) qui est commandée par le compteur (6) et la tension de mesure (U_{M}) et qui ramène l'indicateur de court-circuit en attente lorsque la surintensité de courant n'était qu'un événement passager sans conséquence.

3. Indicateur de court-circuit suivant la revendication 2,
**caractérisé en ce que** le voyant (7) est activé seulement après le passage de la fenêtre de réarmement de courant (11).

4. Indicateur de court-circuit suivant la revendication 1,
**caractérisé en ce que** la charge variable (2) comprend un transistor à effet de champ (T1), une diode Zener limitant la tension (D3) et un réseau RC déterminant le comportement dans le temps (R1, R2, R3, C1).

5. Indicateur de court-circuit suivant la revendication 1,
**caractérisé en ce que** la charge variable (2) comprend une diode Zener (D3) limitant la tension, un réseau RC déterminant le comportement dans le temps (R1, R2, R3, C1), un comparateur (KOMP3), un transistor de décharge (T3), une mémoire numérique (IC6), un groupe de transistors de commutation (T4 - TO) et une série de résistances ohmiques apparentes (R30 - RM), de telle manière que le niveau de charge atteint est mis en mémoire de manière durable.

6. Indicateur de court-circuit suivant la revendication 5,
**caractérisé en ce que** chaque sortie (QA, QB à QH) de la mémoire numérique (IC6) commande, par l'intermédiaire d'une résistance série (R19, R20 à RN), un transistor ou un thyristor (T4, T5 à TO) qui met en circuit de manière durable une résistance ohmique apparente (R30, R31 à RM).

7. Indicateur de court-circuit suivant la revendication 6,
**caractérisé en ce qu'**un compteur (IC9), qui est monté en amont de la mémoire numérique (IC6), est alimenté par un oscillateur (IC8, R40, C6) et délivre périodiquement sur la mémoire numérique (IC6) une impulsion de réarmement réduisant la charge variable.

8. Indicateur de court-circuit suivant la revendication 7,
**caractérisé en ce que** la sortie du comparateur (KOMP3) est reliée à une entrée du réarmement du compteur (IC9).

9. Indicateur de court-circuit suivant la revendication 7,
**caractérisé en ce que** le montage sert de convertisseur analogique-numérique pour indiquer en permanence l'intensité réelle.
